# EUROPÄISCHE PATENTSCHRIFT

(11) **EP 3 220 469 B1**
(45) Veröffentlichungstag und Bekanntmachung des Hinweises auf die Patenterteilung: **01.05.2024**
(21) Anmeldenummer: 17159069.8
(22) Anmeldetag: 03.03.2017
(51) Int. Cl.: H01M 10/42, H01M 10/0525, H01M 10/48, B60L 53/10

(54) **FLURFÖRDERZEUG MIT EINER TRAKTIONSBATTERIE**
INDUSTRIAL TRUCK WITH TRACTION BATTERY
CHARIOT ÉLÉVATEUR AVEC BATTERIE DE TRACTION

(30) Priorität: 15.03.2016 DE 102016104758
(43) Veröffentlichungstag der Anmeldung: 20.09.2017
(73) Patentinhaber: Linde Material Handling GmbH, 63743 Aschaffenburg (DE)
(72) Erfinder: Kronenberger-Edel, Georg, 63834 Sulzbach (DE); Hergenröther, Christian, 63839 Kleinwallstadt (DE)
(74) Vertreter: Patentship Patentanwaltgesellschaft

(56) Entgegenhaltungen:
- EP-A1- 2 180 776
- WO-A1-2005/085630
- WO-A2-2010/124831
- DE-A1-102011 107 050
- US-A1- 2008 271 937
- US-A1- 2012 249 047

## Beschreibung

Die Erfindung betrifft ein Flurförderzeug mit einer Traktionsbatterie, welche in ein Batteriefach des Flurförderzeugs eingesetzt ist und für einen Austausch vorgesehen ist. Insbesondere betrifft die Erfindung ein Flurförderzeug mit einer Traktionsbatterie, welche in ein Batteriefach des Flurförderzeugs eingesetzt ist und für einen Austausch vorgesehen ist, mit einer Batterie mit hoher Spannung oberhalb von 80V, insbesondere 400V, als Energiespeicher und einem Spannungsumsetzer, um eine Betriebsspannung des Flurförderzeugs an einem Entladeanschluss zur Verfügung zu stellen.

Zunehmend in größerem Umfang eingesetzt werden jedoch Lithium-Ionenbatterien, die eine in der Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei Lithium-lonenbatterien sind ebenfalls unterschiedliche Technologien bekannt, wie beispielsweise Lithium-Polymer, Lithium-Cobaltdioxid, Lithium-Luft, Lithium-Titanat, Lithium-Eisenphosphat, Lithium-Mangan und Zinn-Schwefel-Lithiumionen.

Insbesondere bei solchen Hochleistungsbatterien, aber auch bei Blei-Säurebatterie entsteht das Problem, dass sich lange Ladezeiten der Batterien durch die Höhe des Ladestroms ergeben, der begrenzt ist und der maßgeblich die Erwärmung beim Laden sowie die Dimensionierung und Auslegung der Anschlussleitungen bestimmt. Nachteilig ist insbesondere, dass die zuvor genannten relativ niedrigen Spannungen bei der Verwendung von Traktionsbatterie mit einer großen Kapazität keine Schnellladung ermöglichen. Eine solche Schnellladung ist jedoch besonders vorteilhaft, da durch diese kurze Arbeitspausen genutzt werden können und beispielsweise eine Wiederaufladung innerhalb einer Stunde oder einer halben Stunde erfolgen kann, sodass eventuell sogar keine zweite Batterie für einen Wechsel im Mehrschichtbetrieb vorgehalten werden muss.

Es ist denkbar, deswegen die Traktionsbatterie und das gesamte batterie-elektrisch betriebene Flurförderzeug mit einer höheren Spannung zu betreiben. Zumeist sind jedoch derzeitige Antriebskonzepte und auch die sonstige elektrische Anlage hierauf nicht ausgelegt und dies erfordert nicht unerhebliche Anpassungen, schon aus Sicherheitsgründen und für eine bessere Isolierung, wenn beispielsweise eine Spannung von 400 V eingesetzt wird.

Es ist denkbar, hier eventuell einen Spannungsumsetzer in die Batterie zu integrieren. Ein solches Konzept eines bidirektionalen Spannungsumsetzers, der sowohl beim Entladen eine Batteriespannung anpasst, als auch beim Laden eingesetzt werden kann, ist aus der WO 2006/045016 A2 bekannt, die eine Batterie mit Lithium-Zellen, ein Batteriemanagementsystem und einem Spannungsumsetzer offenbart, durch die das Verhalten und insbesondere die Spannungskennlinie bei der Entladung auf diejenige einer entsprechenden Blei-Säurebatterie umgesetzt wird. In einer Ausführungsform wird beschrieben, dass der Spannungsumsetzer ein bidirektionaler Spannungsumsetzer sein kann.

Nachteilig an diesem Stand der Technik ist zum einen, dass durch diesen noch keine Möglichkeit einer Schnellladung offenbart wird. Auch eine denkbare Schnellladung, indem durch den bidirektionalen Spannungsumsetzer eine Spannung zumindest im Ladebetrieb erheblich nach oben gesetzt wird, ist jedoch mit dem Nachteil verbunden, dass hierfür eine erhebliche Leistung des Spannungsumsetzers bereitgestellt werden muss mit der damit verbundenen Verlustleistung.

Die EP 2 180 776 A1 offenbart eine automotiven Umrichtervorrichtung für ein elektrisches, hybrides oder mit Brennstoffzellen angetriebenes Fahrzeug.

Die WO 2005/085630 A1 offenbart ein System zum Starten eines Verbrennungsmotors eines Hybridfahrzeugs.

Die US 2008/0271937 A1 offenbart ein System und ein Verfahren zur Bereitstellung von Energie für Verbraucher in einem Fahrzeug während das Fahrzeug sich in einem abgeschalteten Zustand befindet.

Die WO 2010/124831 A2 offenbart ein Batterieladesystem für ein Hybridfahrzeug.

Die US 2012/0249047 A1 offenbart ein System zum Laden von Hochvolttraktionsbatterien über ein Photovoltaiksystem.

Die DE 10 2011 107 050 A1 offenbart eine Traktionsbatterie mit einer Batteriemanagementvorrichtung.

Der vorliegenden Erfindung liegt die Aufgabe zugrunde, ein Flurförderzeug mit einer Traktionsbatterie zur Verfügung zu stellen, das die zuvor genannten Nachteile vermeidet und mit dem ein Schnellladebetrieb auf einfache Art und Weise möglich ist.

Diese Aufgabe wird durch ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass die Batterie über einen Ladeanschluss direkt mit hoher Spannung oberhalb von 80V, insbesondere 400V, geladen werden kann.

Vorteilhaft können dadurch Batterien mit einer hohen Spannung als Energiespeicher, d.h. oberhalb von 80 V bei Flurförderzeugen, eingesetzt werden, und es wird eine schnelle Ladung möglich. Dabei handelt es sich um Traktionsbatterien, die in ein Batteriefach eines Flurförderzeugs eingesetzt werden können und für einen Austausch vorgesehen sind. Während etwa bei einem bisherigen Ladegerät bei einer 48 V Traktionsbatterie eine Leistung von 10 kW bereits einen Ladestrom von 200 A bedeuten würde, ermöglicht eine Batteriespannung von beispielsweise 400 V für den eigentlichen Energiespeicher eine Leistung von 50 kW bei nur ca. 125 A Ladestrom. Es kann eine Schnellladefähigkeit bei bereits bestehenden Flurförderzeugen erreicht werden, indem über einen eigenen und getrennten Ladeanschluss mit hoher Spannung die Batterie aufgeladen wird, während für den Betrieb des Flurförderzeugs im Entladebetrieb über den Spannungsumsetzer die herkömmliche und für das jeweilige Fahrzeug vorgesehene Betriebsspannung zur Verfügung gestellt wird. Dabei kann eine Anpassung an die jeweilige Betriebsspannung allein über den Spannungsumsetzer erfolgen und es kann die erforderliche Variantenvielfalt von Traktionsbatterien reduziert werden. Auch werden Entwicklungszeit und -kosten eingespart, da die Traktionsbatterie für verschiedene Anwendungen und Spannungen das gleiche technische Grundkonzept aufweist. Ebenso kann auch eine Reduzierung der Varianten von Ladegeräten erfolgen, wenn das Laden stets mit der gleichen hohen Spannung erfolgt. Weitere Vorteile ergeben sich dadurch, dass in einem Betriebsgelände durch das schnelle Laden die Anzahl an Ladestationen oder Ladeplätzen reduziert werden kann, indem in gleicher Zeit mehr Ladevorgänge ermöglicht werden. Nicht zuletzt ergibt sich im Entladebetrieb und Betrieb des Flurförderzeugs der Vorteil, dass die Batterie mit hoher Spannung bei einer starken Belastung nur in geringerem Maße zu lastabhängigen Spannungseinbrüchen neigt und sich ein höherer Wirkungsgrad ergibt.

Vorteilhaft ist die Batterie eine Hochleistungsbatterie, insbesondere eine Lithiumlonenbatterie.

Hochleistungsbatterien, wie sie oben definiert und beschrieben wurden, und insbesondere Lithium-lonen Batterien sind besonders gut geeignet für eine Schnellladung.

Die Traktionsbatterie kann eine Batteriemanagement-Steuerung umfassen.

In einer vorteilhaften Weiterbildung kann die Batteriemanagement-Steuerung über eine Kommunikationsverbindung mit dem Flurförderzeug verbunden werden.

Die Batteriemanagement-Steuerung kann über eine Ladegerätkommunikationsverbindung mit einem Ladegerät verbunden werden.

Eine solche Kommunikationsverbindung zur Peripherie bzw. dem Flurförderzeug und/oder dem Ladegerät ist optional, wobei eine Datenverbindungs-Schnittstelle aus einer oder mehreren Steuerleitungen besteht. Die Kommunikation kann dabei über ein Datenbussystem erfolgen und auch über diverse Steuer- oder Codierleitungen.

Vorteilhaft sind die Batterie mit hoher Spannung und der Spannungsumsetzer sowie eventuelle weitere Komponenten der Traktionsbatterie, insbesondere eine Batteriemanagement-Steuerung, in ein Batteriegehäuse mit identischen Maßen wie eine entsprechende Blei-Säurebatterie gesetzt, insbesondere in einen Batterietrog.

Die Traktionsbatterie eines Flurförderzeugs ist bei klassischen Blei-Säurebatterien in einem Batterietrog als Gehäuse angeordnet. Die äußeren maximalen Abmessungen dieser Gehäuse wie auch die verschiedenen Spannungsstufen dieser Traktionsbatterie sind Industrienormen. Wenn daher die hier beschriebene erfindungsgemäße Traktionsbatterie in ihren äußeren Abmessungen so aufgebaut wird, dass sie mit einer herkömmlichen Traktionsbatterie ausgetauscht werden kann bzw. anstatt dieser in ein Batteriefach eines Flurförderzeugs eingesetzt werden kann, ergibt sich eine leichte Nachrüstbarkeit und Nutzung der Vorteile bei herkömmlichen Flurförderzeugen. Umgekehrt ist es auch möglich, bei zukünftigen Flurförderzeugen, die eventuell höhere Betriebsspannungen nutzen, die Traktionsbatterie leicht anzupassen, indem der Spannungsumsetzer entsprechend angepasst wird oder im Extremfall auch bei einer Betriebsspannung entsprechend der Spannung der Batterie entfällt. Neben einer Anordnung des Spannungsumsetzers außen an einem Gehäuse, wobei die Gesamtabmessungen einer normierten Traktionsbatterie entsprechen, ist es dabei besonders vorteilhaft, alle Komponenten, auch eventuell zusätzliche Komponenten, die optional vorgesehen werden können, wie beispielsweise eine Batteriemanagement-Steuerung, zusammen in einem Gehäuse vorzusehen, das den äußeren, normierten Abmessungen eines Batterietrogs einer Blei-Säurebatterie entspricht.

Die Traktionsbatterie kann einen weiteren Spannungsumsetzer für eine Steuerspannung bzw. Spannungsversorgung von Steuervorrichtungen des Flurförderzeugs aufweisen.

Dies ermöglicht es, eine zweite, niedrigere Spannung für Steuerungssysteme des Flurförderzeugs zur Verfügung zu stellen, beispielsweise 13 V.

In einer günstigen Weiterbildung weist die Traktionsbatterie ein Analogmodul auf, über das analoge Signalwerte, wie insbesondere Spannungswerte und Temperaturwerte, zur Verfügung gestellt werden und/oder analogen Signalen entsprechende Informationen aus Steuerbussystemen.

Über eine oder mehrere Leitungen können diverse Analogsignale peripheren Systemen, insbesondere dem Flurförderzeug und/oder dem Ladegerät nutzbar gemacht werden.

Vorteilhaft kann die von dem Spannungsumsetzer zur Verfügung gestellte Betriebsspannung eingestellt werden.

Durch die Einstellbarkeit der Betriebsspannung kann eine leichte Anpassung an unterschiedliche erforderliche Betriebsspannungen verschiedener Flurförderzeuge erfolgen, ohne dass eine aufwändige Umgestaltung und Neuentwicklung der Traktionsbatterie erforderlich ist.

Weitere Vorteile und Einzelheiten der Erfindung werden anhand der in den schematischen Figuren dargestellten Ausführungsbeispiele näher erläutert. Hierbei zeigt
- Fig. 1: schematisch ein Ausführungsbeispiel einer erfindungsgemäßen Traktionsbatterie und
- Fig. 2: ein zweites Ausführungsbeispiel einer erfindungsgemäßen Traktionsbatterie.

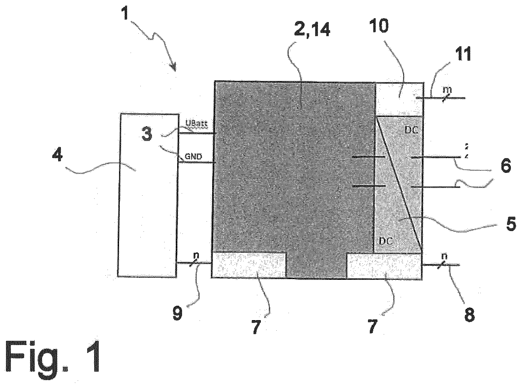

Die Fig. 1 zeigt schematisch ein Ausführungsbeispiel einer erfindungsgemäßen Traktionsbatterie 1. Eine Batterie 2 mit hoher Spannung dient als Energiespeicher 14. Über einen Ladeanschluss 3 und ein Ladegerät 4 mit einer hohen Spannung, im vorliegenden Beispiel von 400 V, kann die Traktionsbatterie 1 sehr schnell geladen werden. Im Entladebetrieb wird die Spannung der Batterie 2 auf eine Betriebsspannung des Flurförderzeugs durch einen Spannungsumsetzer 5 umgesetzt, der die Betriebsspannung an einem Entladeanschluss 6 dem Flurförderzeug zur Verfügung stellt.

Eine Batterie Management-Steuerung 7, die optional vorgesehen sein kann, ist über eine erste Kommunikationsverbindung 8 mit n parallelen Datenleitungen mit dem Flurförderzeug verbunden. Über eine zweite Kommunikationsverbindung 9 mit ebenfalls n parallelen Datenleitungen ist sie mit dem Ladegerät 4 verbunden. Dadurch können der Ladevorgang wie auch der Entladevorgang der Traktionsbatterie 1 gesteuert und geregelt werden.

Weiterhin ist in dem vorliegenden Ausführungsbeispiel der Traktionsbatterie 1 ein optional mögliches Analogmodul 10 integriert, das analoge Signalwerte über m Leitungen 11 der Peripherie zur Verfügung stellt, hier insbesondere dem Flurförderzeug. Dabei kann es sich beispielsweise um Spannungswerte oder Temperaturwerte handeln.

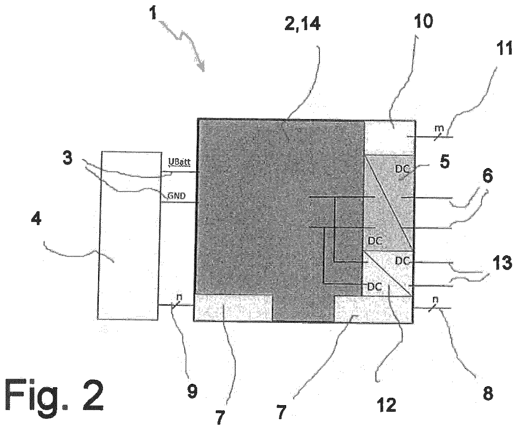

Die Fig. 2 zeigt ein zweites Ausführungsbeispiel einer erfindungsgemäßen Traktionsbatterie1. Diese weist ebenfalls die Batterie 2 mit hoher Spannung auf, die über die Ladeanschlüsse 3 mit dem Ladegerät 4 verbunden ist sowie den Spannungsumsetzer 5 mit den Entladeanschlüssen 6 und die Batteriemanagement-Steuerung 7, die über die Kommunikationsverbindungen 8,9 mit dem Flurförderzeug und dem Ladegerät 4 verbunden ist. Ebenso ist auch bei diesem Ausführungsbeispiel der Traktionsbatterie 1 das Analogmodul 10 mit den Leitungen 11 vorgesehen.

Zusätzlich weist die Traktionsbatterie 1 einen weiteren Spannungsumsetzer 12 auf, der eine Steuerspannung, im vorliegenden Beispiel von 13 V, über eine Steuerspannungsleitung 13 dem Flurförderzeug zur Verfügung stellt.

## Patentansprüche

1. Flurförderzeug mit einer Traktionsbatterie (1), welche in ein Batteriefach des Flurförderzeugs eingesetzt ist und für einen Austausch vorgesehen ist, mit einer Batterie (2) mit hoher Spannung oberhalb von 80V, insbesondere 400V, als Energiespeicher (14) und einem Spannungsumsetzer (5), um eine Betriebsspannung des Flurförderzeugs an einem Entladeanschluss (6) zur Verfügung zu stellen,
**dadurch gekennzeichnet,**
**dass** die Batterie (2) über einen Ladeanschluss (3) direkt mit hoher Spannung oberhalb von 80V, insbesondere 400V, geladen werden kann.

2. Flurförderzeug nach Anspruch 1,
**dadurch gekennzeichnet,**
**dass** die Batterie (2) eine Hochleistungsbatterie ist, insbesondere eine Lithiumlonenbatterie.

3. Flurförderzeug nach Anspruch 1 oder 2,
**dadurch gekennzeichnet,**
**dass** die Traktionsbatterie (1) eine Batteriemanagement-Steuerung (7) umfasst.

4. Flurförderzeug nach Anspruch 3,
**dadurch gekennzeichnet,**
**dass** die Batteriemanagement-Steuerung (7) über eine Kommunikationsverbindung (8) mit dem Flurförderzeug verbunden werden kann.

5. Flurförderzeug nach Anspruch 3 oder 4,
**dadurch gekennzeichnet,**
**dass** die Batteriemanagement-Steuerung (7) über eine Ladegerätkommunikationsverbindung (9) mit einem Ladegerät (4) verbunden werden kann.

6. Flurförderzeug nach einem der Ansprüche 1 bis 5,
**dadurch gekennzeichnet,**
**dass** die Batterie (2) mit hoher Spannung oberhalb von 80V, insbesondere 400V, und der Spannungsumsetzer (5) sowie eventuelle weitere Komponenten der Traktionsbatterie (1), insbesondere eine Batteriemanagement-Steuerung (7), in ein Batteriegehäuse mit identischen Maßen wie eine entsprechende Blei-Säurebatterie, insbesondere in einen Batterietrog, gesetzt sind.

7. Flurförderzeug nach einem der Ansprüche 1 bis 6,
**dadurch gekennzeichnet,**
**dass** die Traktionsbatterie (1) einen weiteren Spannungsumsetzer (12) für eine Steuerspannung bzw. Spannungsversorgung von Steuervorrichtungen des Flurförderzeugs aufweist.

8. Flurförderzeug nach einem der Ansprüche 1 bis 7,
**dadurch gekennzeichnet,**
**dass** die Traktionsbatterie (1) ein Analogmodul (10) aufweist, über das analoge Signalwerte, wie insbesondere Spannungswerte und Temperaturwerte, zur Verfügung gestellt werden und/oder analogen Signalen entsprechende Informationen aus Steuerbussystemen.

9. Flurförderzeug nach einem der Ansprüche 1 bis 8,
**dadurch gekennzeichnet,**
**dass** die von dem Spannungsumsetzer (5) zur Verfügung gestellte Betriebsspannung eingestellt werden kann.

## Claims

1. Industrial truck having a traction battery (1), which is inserted into a battery compartment of the industrial truck and is intended to be replaced, having a high-voltage battery (2) of above 80V, in particular 400V, as an energy store (14) and having a voltage converter (5) in order to make available an operating voltage of the industrial truck at a discharging terminal (6),
**characterized**
**in that** the battery (2) can be charged directly with a high voltage of above 80V, in particular 400V, via a charging terminal (3).

2. Industrial truck according to Claim 1,
**characterized**
**in that** the battery (2) is a high-performance battery, in particular a lithium-ion battery.

3. Industrial truck according to Claim 1 or 2,
**characterized**
**in that** the traction battery (1) comprises a battery management controller (7).

4. Industrial truck according to Claim 3,
**characterized**
**in that** the battery management controller (7) can be connected to the industrial truck via a communication connection (8).

5. Industrial truck according to Claim 3 or 4,
**characterized**
**in that** the battery management controller (7) can be connected to a charging device (4) via a charging-device communication connection (9).

6. Industrial truck according to one of Claims 1 to 5,
**characterized**
**in that** the high-voltage battery (2) of above 80V, in particular 400V, and the voltage converter (5) as well as possible further components of the traction battery (1), in particular a battery management controller (7), are placed in a battery housing having identical dimensions to a corresponding lead-acid battery, in particular in a battery tray.

7. Industrial truck according to one of Claims 1 to 6,
**characterized**
**in that** the traction battery (1) has a further voltage converter (12) for a control voltage or power supply from control apparatuses of the industrial truck.

8. Industrial truck according to one of Claims 1 to 7,
**characterized**
**in that** the traction battery (1) has an analogue module (10) which is used to make available analogue signal values, such as in particular voltage values and temperature values, and/or information from control bus systems which corresponds to analogue signals.

9. Industrial truck according to one of Claims 1 to 8,
**characterized**
**in that** the operating voltage made available by the voltage converter (5) can be adjusted.

## Revendications

1. Convoyeur au sol comprenant une batterie de traction (1), qui est insérée dans un compartiment de batterie du convoyeur au sol et qui est destinée à être remplacée, une batterie (2) à haute tension supérieure à 80 V, en particulier 400 V, comme accumulateur d'énergie (14) et un convertisseur de tension (5) destiné à fournir une tension de fonctionnement au convoyeur au sol au niveau d'une borne de décharge (6),
**caractérisé en ce que**
la batterie (2) peut être chargée directement avec une haute tension supérieure à 80 V, en particulier 400 V, par le biais d'une borne de charge (3).

2. Convoyeur au sol selon la revendication 1,
**caractérisé en ce que**
la batterie (2) est une batterie à haute performance, en particulier une batterie à ions lithium.

3. Convoyeur au sol selon la revendication 1 ou 2,
**caractérisé en ce que**
la batterie de traction (1) comprend une commande de gestion de batterie (7).

4. Convoyeur au sol selon la revendication 3,
**caractérisé en ce que**
la commande de gestion de batterie (7) peut être reliée au convoyeur au sol par le biais d'une liaison de communication (8).

5. Convoyeur au sol selon la revendication 3 ou 4,
**caractérisé en ce que**
la commande de gestion de batterie (7) peut être reliée à un chargeur (4) par le biais d'une liaison de communication de chargeur (9).

6. Convoyeur au sol selon l'une des revendications 1 à 5,
**caractérisé en ce que**
la batterie (2) à haute tension supérieure à 80 V, en particulier 400 V, et le convertisseur de tension (5) ainsi que d'éventuels autres composants de la batterie de traction (1), en particulier une commande de gestion de batterie (7), sont placés dans un boîtier de batterie, notamment dans un bac à batterie, dont les dimensions sont identiques à celles d'une batterie au plomb correspondante.

7. Convoyeur au sol selon l'une des revendications 1 à 6,
**caractérisé en ce que**
la batterie de traction (1) comporte un autre convertisseur de tension (12) destiné à une tension de commande ou une alimentation en tension de dispositifs de commande du convertisseur au sol.

8. Convoyeur au sol selon l'une des revendications 1 à 7,
**caractérisé en ce que**
la batterie de traction (1) comporte un module analogique (10) délivrant des valeurs de signal analogiques, telles que notamment des valeurs de tension et des valeurs de température, et/ou des informations provenant de systèmes de bus de commande et correspondant à des signaux analogiques.

9. Convoyeur au sol selon l'une des revendications 1 à 8,
**caractérisé en ce que**
la tension de fonctionnement délivrée par le convertisseur de tension (5) peut être réglée.
